# EUROPÄISCHE PATENTANMELDUNG

(11) **EP 0 551 583 A1**
(43) Veröffentlichungstag der Anmeldung: **21.07.1993**
(21) Anmeldenummer: 92119433.8
(22) Anmeldetag: 13.11.1992
(51) Int. Cl.: F21S 9/02

(54) **Beleuchtungseinrichtung, insbes. zum Einsatz an Gebäuden ohne elektrischen Netzanschluss**

(30) Priorität: 11.01.1992 DE 9200257 U
(71) Anmelder: FIRMA GEORG KNOBLAUCH, D-89537 Giengen (DE)
(72) Erfinder: Budert, Günter H., W-8887 Bachhagel (DE)
(74) Vertreter: Dziewior, Joachim, Dipl.-Phys. Dr.

(57) **Zusammenfassung**

Die Beleuchtungseinrichtung ist insbesondere zum Einsatz an Gebäuden ohne elektrischen Netzanschluß vorgesehen, also z. B. in freistehenden Garagen und dergleichen. Sie ist mit einem Beleuchtungselement, einer Stromquelle (2) sowie einem Schaltglied (3) zur Unterbrechung des Stromflusses von der Stromquelle (2) durch das Beleuchtungselement versehen. Das Beleuchtungselement, die Stromquelle (2) sowie das Schaltglied (3) sind gemeinsam in einem Gehäuse (4) angeordnet, das zum Anschluß an der Innenseite einer Tür (5), eines Tors oder dergleichen eingerichtet ist. An der Außenseite der Tür (5) bzw. des Tors ist ein Solarpanel (6) vorgesehen, das über eine durch eine Bohrung (8) in der Tür (5) bzw. im Tor verlaufende Leitung mit einem ebenfalls im Gehäuse (4) angeordneten Laderegler zur Aufladung der als Akkumulator ausgebildeten Stromquelle (2) verbunden ist.

## Beschreibung

Die Erfindung betrifft eine Beleuchtungseinrichtung, insbes. zum Einsatz an Gebäuden ohne elektrischen Netzanschluß wie in freistehenden Garagen und dergl., mit einem Beleuchtungselement, einer Stromquelle sowie einem Schaltglied zur Unterbrechung des Stromflusses von der Stromquelle durch das Beleuchtungselement.

Beleuchtungseinrichtungen, die an Orten ohne einen elektrischen Netzanschluß betrieben werden sollen, sind üblicherweise entweder mit Batterien oder aber mit Akkumulatoren ausgestattet, so daß in regelmäßigen Zeitabständen ein Austausch der Batterien oder aber ein Wiederauflagen der Akkumulatoren erfolgen muß. Ein wartungsfreier Dauerbetrieb ist auf diese Weise nicht möglich.

Der Erfindung liegt die Aufgabe zugrunde, eine Beleuchtungseinrichtung der eingangs genannten Art zu schaffen, die im wesentlichen wartungsfrei betrieben werden kann, dabei leicht und einfach zu installieren ist und die Möglichkeit schafft, ohne aufwendige Installationen die Beleuchtungseinrichtung auch in Innenräumen betreiben zu können.

Diese Aufgabe wird nach der Erfindung dadurch gelöst, daß das Beleuchtungselement, die Stromquelle sowie das Schaltglied gemeinsam in einem Gehäuse angeordnet sind, das zum Anschluß an der Innenseite einer Tür, eines Tors oder dergl. eingerichtet ist, und daß an der Außenseite der Tür bzw. des Tors ein Solarpanel vorgesehen ist, das über eine durch eine Bohrung in der Tür bzw. im Tor verlaufende Leitung mit einem ebenfalls im Gehäuse angeordneten Laderegler zur Aufladung der als Akkumulator ausgebildeten Stromquelle verbunden ist.

Der durch die Erfindung erreichte Vorteil besteht im wesentlichen darin, daß die Beleuchtungseinrichtung im Inneren von Räumen eingesetzt werden kann, dennoch eine Verbindung zu dem an der Gebäudeaußenseite anzubringenden Solarpanel auf äußerst kurzem Wege hergestellt werden kann. Hierzu bedarf es lediglich einer einfach anzubringenden Bohrung durch die Tür bzw. das Tor. Die Anbringung der Beleuchtungseinrichtung an der Tür bzw. dem Tor bringt weiter den Vorteil, daß ein Ausschalten der Beleuchtungseinrichtung, soweit dies manuell erfolgt, in der Regel nicht vergessen wird, soweit jedenfalls der von der Beleuchtungseinrichtung erhellte Raum durch diese Tür bzw. dieses Tor betreten und verlassen wird.

In bevorzugter Ausführungsform der Erfindung läßt sich die Anbringung der Beleuchtungseinrichtung dadurch weiter vereinfachen, daß das Solarpanel und das Gehäuse über gemeinsame, sich durch Bohrungen in der Tür bzw. im Tor erstreckende Anschlußmittel befestigt und miteinander verbunden sind. Dabei können insbes. die Anschlußmittel fest am Solarpanel angeschlossen sein, so daß dieses durch die im Tor bzw. an der Tür anzubringenden Bohrungen eingesteckt und auf die durch das Tor auf der gegenüber liegenden Seite hindurchtretenden Anschlußmittel das Gehäuse aufgesetzt und angeschlossen wird.

Weiter ist es hierbei von Vorteil, wenn zumindest eines der Anschlußmittel hülsenförmig ausgebildet ist und einen Kanal zur Aufnahme der Leitung bildet. Hierdurch ist nicht nur die Verbindungsleitung zwischen dem Solarpanel und dem Gehäuse geschützt, sondern es erübrigt sich darüber hinaus die Anbringung einer weiteren Bohrungfür diese Leitung.

Zur weiteren Montagevereinfachung können die Anschlußmittel Distanzstücke aufweisen, durch die die lichtempfindliche Vorderfläche des Solarpanels in einer schräg nach oben weisenden Lage gehalten ist.

Als besonderes vorteilhaft ist im Rahmen der Erfindung vorgesehen, daß zum Einsatz an Kipptoren das Schaltglied von einem neigungsabhängigen Schalter gebildet ist. Hierdurch ist sicher gestellt, daß die Beleuchtungseinrichtung angesichts der in der Regel knappen Ladekapazität des Akkumulators ausschließlich während der Öffnungszeit des Tores angeschaltet ist. Das Schaltglied kann dabei zweckmäßigerweise von einem Quecksilberschalter gebildet sein.

Schließlich besteht noch die Möglichkeit, daß am Gehäuse ein Betriebsartenschalter zur wahlweisen Einstellung einer Dauerbeleuchtung, eines durch die Position der Tür bzw. des Tors gesteuerten automatischen Betriebs sowie einer Dauerausschaltung vorgesehen ist.

Im folgenden wird die Erfindung an einem in der Zeichnung dargestellten Ausführungsbeispiel näher erläutert; es zeigen:

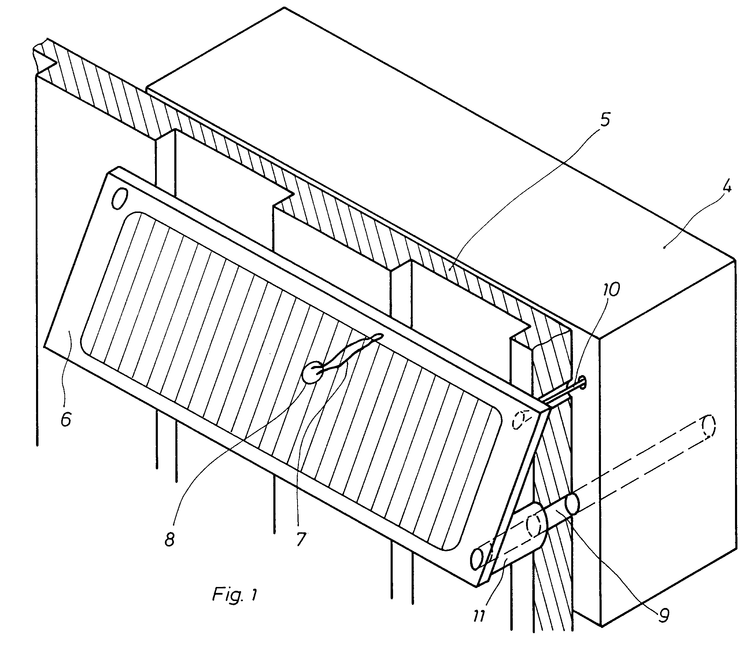

- Fig. 1: eine perspektivische Darstellung der Beleuchtungseinrichtung von der Außenseite des Tors gesehen,
- Fig. 2: den Gegenstand nach Fig. 1, jedoch von der Innenseite des Tors aus gesehen.

Die in der Zeichnung dargestellte Beleuchtungseinrichtung dient insbes. zum Einsatz an Gebäuden ohne elektrischen Netzanschluß wie in freistehenden Garagen und dergl. Sie besteht im einzelnen aus einem nicht näher dargestellten Beleuchtungselement insbes. in stromsparender Ausführung, das hinter einer lichtdurchlässigen Scheibe 1 angeordnet ist. Ferner ist eine Stromquelle 2 sowie ein Schaltglied 3 zur Unterbrechung des Stromflusses von der Stromquelle 2 durch das Beleuchtungselement vorgesehen.

Das Beleuchtungselement, die Stromquelle 2 sowie das Schaltglied 3 sind gemeinsam in einem Gehäuse 4 angeordnet, das zum Anschluß an der Innenseite einer Tür 5, eines Tores oder dergl. eingerichtet ist. An der Außenseite der Tür 5 bzw. des Tors ist ein Solarpanel 6 vorgesehen, das über eine durch eine Bohrung 8 in der Tür bzw. im Tor verlaufende Leitung 7 mit einem ebenfalls im Gehäuse 4 angeordneten Laderegler verbunden ist, der zur Aufladung der als Akkumulator ausgebildeten Stromquelle 2 dient.

Das Solarpanel 6 und das Gehäuse 4 sind über gemeinsame, sich durch Bohrungen 9 in der Tür 5 bzw. im Tor erstreckende Anschlußmittel 10 befestigt und miteinander verbunden. Dabei besteht auch die in der Zeichnung nicht dargestellte Möglichkeit, zumindest eines der Anschlußmittel 10 hülsenförmig auszubilden, so daß durch den von der Hülse gebildeten Kanal die Leitung 7 geführt werden kann. Dies erspart einerseits eine zusätzliche Bohrung für die Leitung 7 und bietet dieser darüber hinaus zusätzlichen Schutz gegen mechanische Beschädigungen. Die Anschlußmittel 10 sind zweckmäßigerweise fest am Solarpanel 6 angeschlossen, so daß nach Anbringung der Bohrungen 9 im Tor bzw. in der Tür 5 dieses lediglich mit den Anschlußmitteln 10 in die Bohrungen 9 eingeschoben werden muß, worauf von der Innenseite her die Montage des Gehäuses 4 erfolgen kann. Ein Teil der Anschlußmittel 10 ist mit Distanzstücken 11 versehen, durch die die lichtempfindliche Vorderfläche des Solarpanels 6 in einer schräg nach oben weisenden Lage gehalten ist.

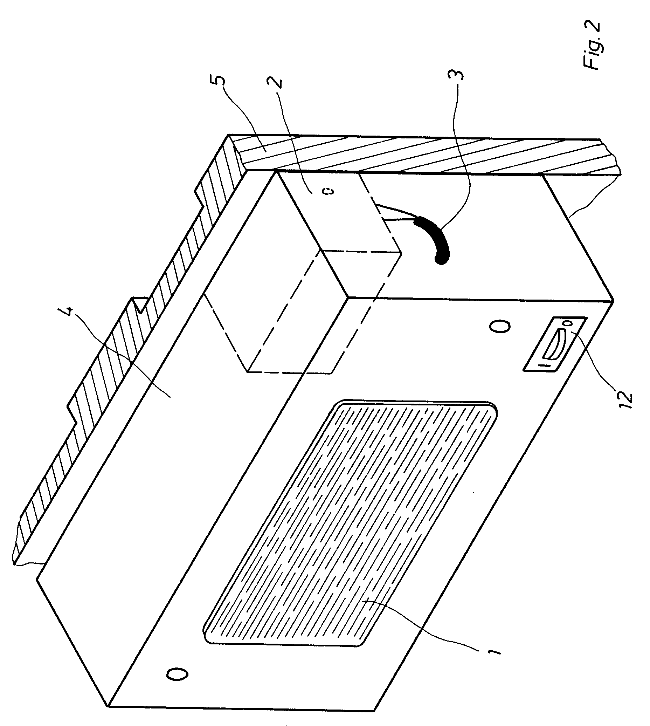

Um die Belastung der Stromquelle 2 möglichst klein zu halten, ist zum Einsatz der Beleuchtungseinrichtung an Kipptoren das Schaltglied 3 von einem neigungsabhängigen Schalter gebildet. Dieser Schalter kann, wie in der Fig. 2 angedeutet, von einem Quecksilberschalter gebildet sein. Schließlich ist am Gehäuse noch ein Betriebsartenschalter 12 vorgesehen, der die wahlweise Einstellung einer Dauerbeleuchtung, eines durch die Position der Tür bzw. des Tors gesteuerten automatischen Betriebs sowie einer Dauerausschaltung ermöglicht.

## Patentansprüche

1. Beleuchtungseinrichtung, insbesondere zum Einsatz an Gebäuden ohne elektrischen Netzanschluß wie in freistehenden Garagen und dergleichen, mit einem Beleuchtungselement, einer Stromquelle (2) sowie einem Schaltglied (3) zur Unterbrechung des Stromflusses von der Stromquelle (2) durch das Beleuchtungselement, dadurch gekennzeichnet, daß das Beleuchtungselement, die Stromquelle (2) sowie das Schaltglied (3) gemeinsam in einem Gehäuse (4) angeordnet sind, das zum Anschluß an der Innenseite einer Tür (5), eines Tors oder dergleichen eingerichtet ist, und daß an der Außenseite der Tür (5) bzw. des Tors ein Solarpanel (6) vorgesehen ist, das über eine durch eine Bohrung (8) in der Tür (5) bzw. im Tor verlaufende Leitung mit einem ebenfalls im Gehäuse (4) angeordneten Laderegler zur Aufladung der als Akkumulator ausgebildeten Stromquelle (2) verbunden ist.

2. Beleuchtungseinrichtung nach Anspruch 1, dadurch gekennzeichnet, daß das Solarpanel (6) und das Gehäuse (4) über gemeinsame, sich durch Bohrungen (9) in der Tür (5) bzw. im Tor erstreckende Anschlußmittel (10) befestigt und miteinander verbunden sind.

3. Beleuchtungseinrichtung nach Anspruch 2, dadurch gekennzeichnet, daß zumindest eines der Anschlußmittel (10) hülsenförmig ausgebildet ist und einen Kanal zur Aufnahme der Leitung (7) bildet.

4. Beleuchtungseinrichtung nach Anspruch 2 oder 3, dadurch gekennzeichnet, daß die Anschlußmittel (10) fest am Solarpanel angeschlossen sind.

5. Beleuchtungseinrichtung nach einem der Ansprüche 2 bis 4, dadurch gekennzeichnet, daß die Anschlußmittel (10) Distanzstücke (11) aufweisen, durch die die lichtempfindliche Vorderfläche des Solarpanel (6) in einer schräg nach oben weisenden Lage gehalten ist.

6. Beleuchtungseinrichtung nach einem der Ansprüche 1 bis 5, dadurch gekennzeichnet, daß zum Einsatz an Kipptoren das Schaltglied (3) von einem neigungsabhängigen Schalter gebildet ist.

7. Beleuchtungseinrichtung nach Anspruch 6, dadurch gekennzeichnet, daß das Schaltglied (3) von einem Quecksilberschalter gebildet ist.

8. Beleuchtungseinrichtung nach einem der Ansprüche 1 bis 7, dadurch gekennzeichnet, daß am Gehäuse ein Betriebsartenschalter (12) zur wahlweisen Einstellung einer Dauerbeleuchtung, eines durch die Position der Tür bzw. des Tors gesteuerten automatischen Betriebs sowie einer Dauerausschaltung vorgesehen ist.
